# EUROPEAN PATENT APPLICATION

(11) **EP 4 075 335 A1**
(43) Date of publication of application: **19.10.2022**
(21) Application number: 21305490.1
(22) Date of filing: 14.04.2021
(51) Int. Cl.: G06K 19/073, G06K 9/00, G06Q 20/34, G06Q 20/40, G07F 7/08

(54) **METHOD FOR MANAGING A SMART CARD**

(71) Applicant: Thales DIS France SA, 92190 Meudon (FR)
(72) Inventor: FAVREAU, Valentin, 92190 MEUDON (FR); OUNG, Richard, 92190 MEUDON (FR)
(74) Representative: Grevin, Emmanuel

(57) **Abstract**

The invention is a method for managing a card (10) during a transaction. The card comprises a reference data (21) previously enrolled by a user and a biometric sensor. The method comprises the steps in which the card:
- Receives an applicative command (91) comprising a set of transaction parameters and requiring the card to authenticate the user,
- Gets a captured biometric data from the user,
- Generates a first result by verifying that the captured data matches the reference data,
- Generates a decision data by executing a risk analysis applied an element of a group comprising said set and first result,
- Builds a message from said first result and, depending on the decision data, from a second result generated by the card by executing a liveness detection applied to the captured data, and
- Sends the message to the terminal to authorize or deny the transaction.

## Description

### (Field of the invention)

The present invention relates to methods for managing a smart card. It relates particularly to methods of managing biometric features of a smart card which embeds at least one biometric sensor.

### (Background of the invention)

Smart cards are portable small devices comprising a memory, a microprocessor and an operating system for computing treatments. They may comprise services applications like payment applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which may provide them with electric power either in contact mode or contactless mode.

A smart card may contain a biometric sensor like a fingerprint sensor which can contribute to the authentication of the user of the smartcard. A biometric smart card may embed a biometric reference data corresponding to the user of the smart card. Such a biometric reference data is recorded during an enrollment phase. The biometric smartcard embeds a match algorithm designed to compare a data captured by the biometric sensor with the biometric reference data in order to authenticate the cardholder.

Biometric smartcards may also embed an anti-spoofing algorithm aiming at detecting fraud attempts based on a fake biometric system. For instance the anti-spoofing algorithm may be designed to detect that a cloned fingerprint has been presented to a fingerprint sensor. The anti-spoofing algorithm is also named liveness detection algorithm.

Conventional biometric cards embedding both algorithms are designed to systematically perform liveness detection algorithm then matching verification algorithm consecutively. Such a combination of treatments may require a long time compared to duration of usual transactions whose length may be considered to be acceptable by users.

There is need to enhance the management of biometric features of a smart card and to offer the possibility of reducing the overall time of treatments applied to data captured by a biometric sensor of a card.

### (Summary of the Invention)

The invention aims at solving the above mentioned technical problem.

An object of the present invention is a method for managing a smart card during a transaction. The smart card comprises a reference biometric data previously enrolled by a user. The smart card comprises a biometric sensor. The method comprises the steps in which the smart card:
- Receives an applicative command originated from a terminal, said applicative command comprising a set of transaction parameters and requiring the smart card to authenticate the user using said biometric sensor,
- Gets a captured biometric data from the user using the biometric sensor,
- Generates a first result by performing a match verification to control the captured data matches said reference biometric data,
- Generates a decision data by executing a risk analysis applied to at least one element of a group comprising said set of transaction parameters and said first result,
- Builds a message from said first result and, depending on the decision data, from a second result generated by the smart card by executing a liveness detection applied to the captured data, and
- Sends said message to the terminal to authorize or deny the transaction.

Advantageously, the transaction may be a payment transaction, the applicative command may be a Get Processing Options command and the smart card may execute the risk analysis on receipt of a Generate AC command.

Advantageously, the transaction may be a payment transaction, one transaction parameter of said set may be an amount of the payment transaction, the first result may be a percentage of similarity between the captured data and said reference biometric data, and the decision data may be generated by executing the risk analysis applied to both the amount of the payment transaction and the first result.

Advantageously, the smart card may record the captured data and the smart card may execute the liveness detection on the recorded captured data only if the decision data requires that the message be built from the second result.

Advantageously, the smart card may comprise a secure element and a processing unit distinct from the secure element, the secure element may perform the match verification and the processing unit may perform the liveness detection at the same time and the secure element may retrieve the second result regardless of the decision data.

Advantageously, the secure element may check a level of electrical energy available to the smart card and may perform said match verification and said liveness detection at the same time only if the level of electrical energy is above a preset threshold.

Advantageously, the smart card may comprise a secure element and a processing unit distinct from the secure element, the secure element may perform the match verification and the processing unit may perform the liveness detection at the same time and the secure element may retrieve said second result only if specified by the decision data.

Advantageously, the secure element may check a level of electrical energy available to the smart card and may perform said match verification and said liveness detection at the same time only if the level of energy is above a preset threshold.

Another object of the present invention is a smart card comprising a biometric sensor and a reference biometric data previously enrolled by a user. The smart card is configured to:
- Receive an applicative command originated from a terminal, said applicative command comprising a set of transaction parameters and requiring the smart card to authenticate the user using said biometric sensor, said applicative command being part of a transaction,
- Get a captured biometric data from the user using the biometric sensor,
- Generate a first result by performing a match verification to control the captured data matches said reference biometric data,
- Generate a decision data by executing a risk analysis applied to at least one element of a group comprising said set of transaction parameters and said first result,
- Build a message from said first result and, depending on the decision data, from a second result generated by the smart card by executing a liveness detection applied to the captured data, and
- Send said message to the terminal to authorize or deny the transaction.

Advantageously, the transaction may be a payment transaction, the applicative command may be a Get Processing Options command and the smart card may be configured to execute the risk analysis on receipt of a Generate AC command.

Advantageously, the smart card may record the captured data and the smart card may be configured to execute the liveness detection on the recorded captured data only if the decision data requires that the message be built from the second result.

Advantageously, the smart card may comprise a secure element and a processing unit distinct from the secure element, the smart card may be configured to have both the secure element which performs said match verification and the processing unit which performs said liveness detection at the same time and the secure element may be configured to retrieve said second result regardless of the decision data.

Advantageously, the smart card may comprise a secure element and a processing unit distinct from the secure element, the smart card may be configured to have both the secure element which performs the match verification and the processing unit which performs the liveness detection at the same time and the secure element may be configured to retrieve said second result only if specified by the decision data.

### (Brief description of the drawings)

Other characteristics and advantages of the present invention will emerge more clearly from a reading of the following description of a number of preferred embodiments of the invention with reference to the corresponding accompanying drawings in which:
- Figures 1-3 shows a three exemplary flow diagrams for managing biometric features of a smart card according to an example of the invention, and
- Figure 4 shows a diagram of architecture of a biometric smart card according to an example of the invention.

### (Detailed description of the preferred embodiments)

The invention may apply to any type of biometric smart card associated to a user and intended to provide a service. The biometric smart card may be a bank smart card, an identity document or an access badge for instance.

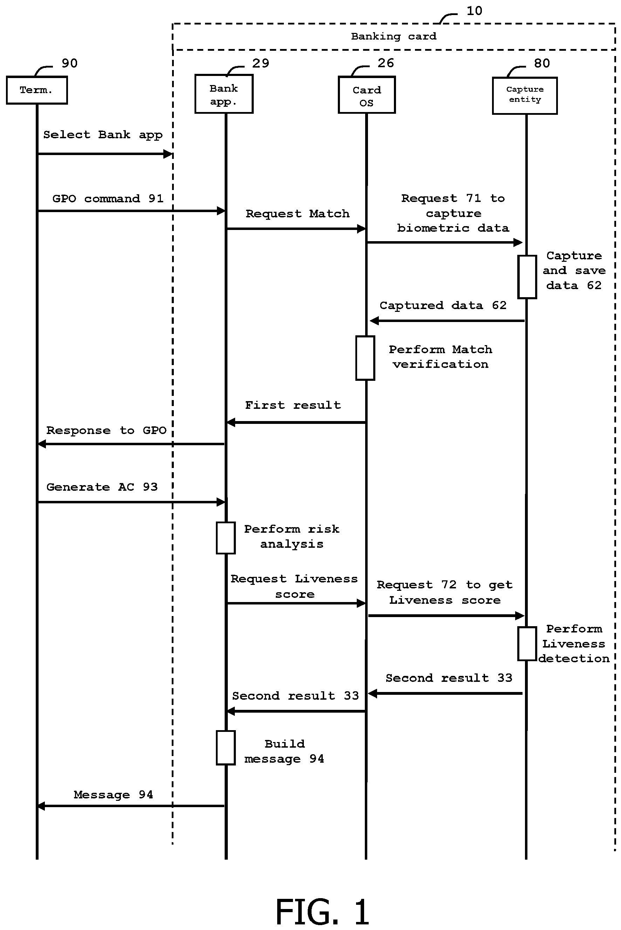

Figure 1 shows a first exemplary flow diagram for managing biometric features of a smart card according to an example of the invention.

In this example, the biometric smart card is a banking card intended to be used by its associated user (i.e. bank customer) for payment transaction or cash withdrawal.

The bank smart card 10 embeds a biometric sensor designed to capture fingerprint data. The bank smart card embeds a secure element comprising a hardware processing unit, a memory storing an operating system 26 and a banking application 29 designed to contribute to bank services. The secure element is configured to establish a communication channel with the biometric sensor in order to get access to data captured by the sensor. The communication channel may be established either directly between the secure element and the sensor or through a controller of the sensor. The bank smart card comprises a reference biometric data which has been enrolled by the user (i.e. bank customer).

The smart card embeds a capture entity 80 which may comprise the biometric sensor and a sensor controller coupled to the biometric sensor.

The capture entity may comprise instructions designed to perform a liveness detection on a data captured by the fingerprint sensor.

At an optional first step, a payment terminal 90 may send to the smart card 10 a Selection command to select the Banking application 29. Such a Selection command may be treated by the operating system 26. The payment terminal may be a Point-Of-Sale (POS) terminal.

Then the payment terminal 90 may send to the smart card 10 an applicative command 91 comprising a set of transaction parameters and requiring the smart card to authenticate the user using the biometric sensor. In a preferred embodiment, the applicative command 91 is the Get Processing Options as defined by EMV^{®} Integrated Circuit Card Specifications for Payment Systems, Version 4.3 for instance.

Upon receipt of the applicative command 91, the banking application 29 may request to the operating system the result of a fingerprint match operation. In turn, the operating system may ask the capture entity 80 to capture a biometric data of the user using the fingerprint sensor.

Upon receipt of the request to capture a biometric data, the capture entity 80 may get a biometric data 62 from the cardholder and save the captured biometric data 62 in its memory. Then the capture entity 80 may send the captured biometric data 62 to the operating system which in turn may trigger execution of the match verification aiming at controlling that the captured biometric data 62 matches the reference biometric data previously stored in the smart card.

Once available, the result (I.e. first result) of the match verification may be provided to the banking application which can generate accordingly a response to the received applicative command 91. The generated response may contain biometric fingerprint verification' as a method available to identify the Cardholder if match is successful.

Then the payment terminal 90 may send to the smart card 10 a second applicative command 93 requiring the smart card to provide the payment terminal with a message authorizing or denying a payment transaction. In a preferred embodiment, the second applicative command 93 is the Generate Access Conditions (Generate AC) as defined by EMV^{®} Integrated Circuit Card Specifications for Payment Systems, Version 4.3 for instance.

Upon receipt of the second applicative command 93, the banking application 29 may start a risk analysis which lead to the generation of a decision data. The decision data may be an intermediate decision which may need an additional assessment (like a liveness score). Depending on the generated decision data, the banking application may send a request to get a liveness score to the Operating System. In turn, the operating system may send a request 72 to ask the capture entity 80 to compute a liveness score by performing a liveness detection on the saved captured biometric data 62.

The capture entity 80 may generated the liveness score and send it as a second result 33 to the Operating System which in turn forwards it to the banking application.

Although described with the Operating System as an intermediate, the banking application may directly access the unit in charge of the match verification and the capture entity.

Upon receipt of the second result 33 (i.e. liveness score), the banking application may generate a message 94 by using the first result and the second result 33 depending on the decision data. In other words, if the decision data implies that the second result 33 must be used, the banking application build a message 94 by using the computed liveness score; else the banking application may not request the calculation of the liveness score and prepare the message 94 regardless of the liveness score.

Then the banking application sends the message 94 to the terminal 90 in response to the second applicative command 93.

Thanks to some embodiments of the invention, the smart card may save time and energy by not performing the liveness detection. Thus, the transaction processing can be speeded up for better user experience.

In the example of Figure 1, the secure element and the sensor controller may be merged in a single chip.

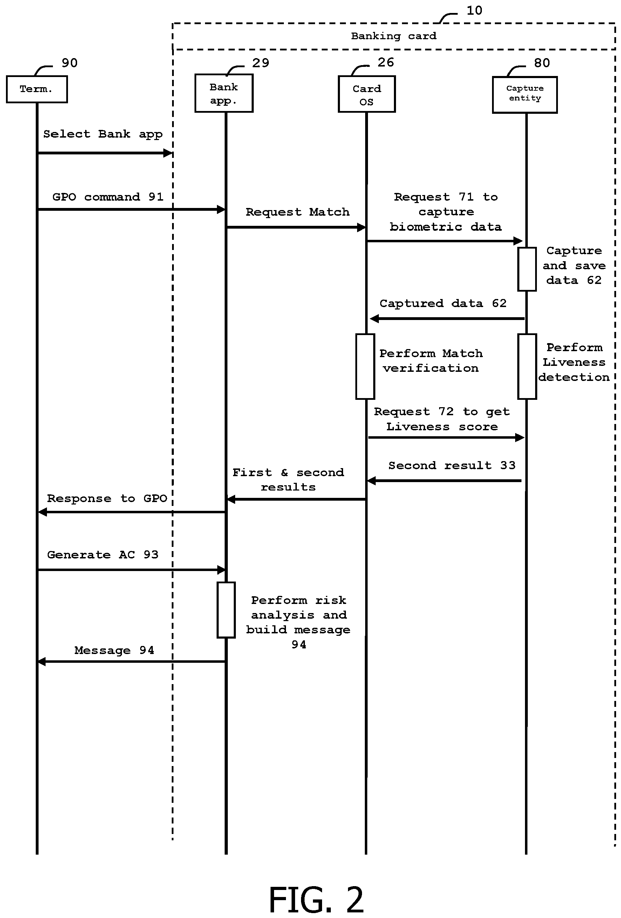

Figure 2 shows a second exemplary flow diagram for managing biometric features of a smart card according to an example of the invention.

In this example, the architecture of the biometric smart card 10 and the terminal 90 are similar to those described at Figure 1.

The first part of the flow is similar to the one described at Figure 1.

A difference appears as soon as the capture entity 80 has sent the captured biometric data 62 to the operating system.

In the flow of Figure 2, both the match verification and the Liveness detection are perform in parallel (at the same time) by two different hardware processing units. These two treatments may have different computation time. They are said parallel because at least a part of their computation treatments are performed at the same time.

Preferably, the match verification is executed by the secure element while the Liveness detection is executed by a controller of the biometric sensor.

It should be noted that in this case the Liveness detection is performed regardless of the result of the match verification and reciprocally.

As soon as the first result if generated by the match verification, the Operating System may send a request 72 to the capture entity 80 in order to get the computed liveness score. In response, the capture entity 80 may send the second result (I.e. liveness score) which is forwarded to the banking application with the first result by the Operating system 26.

Then the banking application may generate a response to the received applicative command 91 and sent it to the terminal 90.

In a further step, the payment terminal 90 may send to the smart card 10 a second applicative command 93 requiring the smart card to provide the payment terminal with a message authorizing or denying a payment transaction. The second applicative command 93 may be the Generate AC command.

Upon receipt of the second applicative command 93, the banking application 29 may perform a risk analysis which lead to the generation of a decision data. Depending on the generated decision data, the banking application may use or not the liveness score previously received.

Then the banking application may generate a message 94 by using the first result and the second result 33 depending on the decision data. In other words, if the decision data implies that the second result 33 must be used, the banking application build a message 94 by using the computed liveness score; else the banking application may discard the liveness score and prepare the message 94 regardless of the liveness score.

Then the banking application may send the message 94 to the terminal 90 in response to the second applicative command 93. The message 94 reflects the authorization or denial to perform the transaction.

Thanks to some embodiments of the invention, the smart card may save time by executing two treatments on the captured biometric data 62 at the same time. Thus, the transaction processing can be speeded up for better user experience.

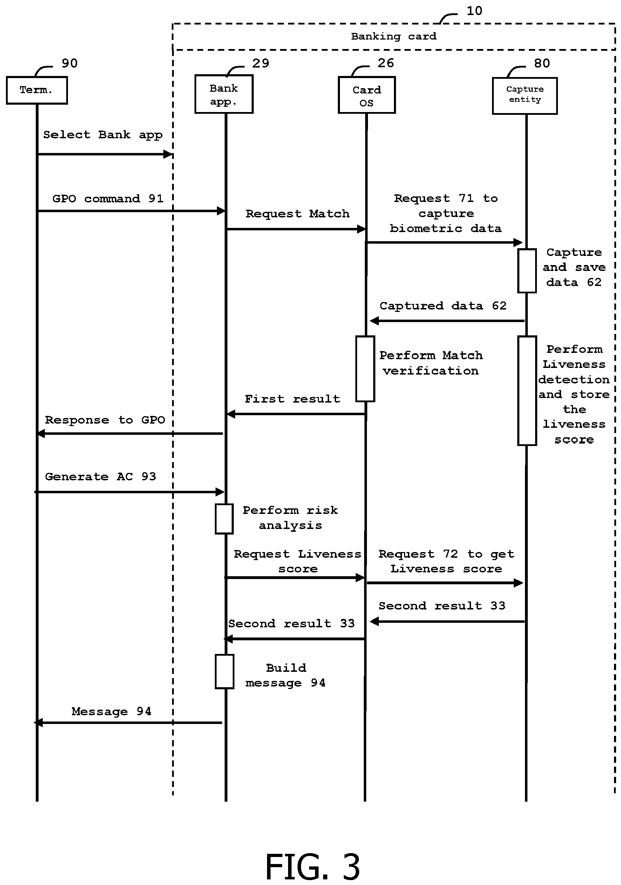

Figure 3 shows a third exemplary flow diagram for managing biometric features of a smart card according to an example of the invention.

In this example, the architecture of the biometric smart card 10 and the terminal 90 are similar to those described at Figure 1.

The first part of the flow is similar to the one described at Figure 1.

A difference appears as soon as the capture entity 80 has sent the captured biometric data 62 to the operating system.

In the flow of Figure 3, both the match verification and the Liveness detection are perform in parallel (at the same time) by two different hardware processing units as done in the flow of Figure 2.

The capture entity may store the second result (I.e. liveness score) in its own memory.

As soon as the first result if generated by the match verification, the Operating System may provide the banking application with the first result. In turn, the banking application may generate a response to the received applicative command 91 and sent it to the terminal 90.

In a further step, the payment terminal 90 may send to the smart card 10 a second applicative command 93 requiring the smart card to provide the payment terminal with a message authorizing or denying a payment transaction. The second applicative command 93 may be the Generate AC command.

Upon receipt of the second applicative command 93, the banking application 29 may perform a risk analysis which lead to the generation of a decision data. If required by the generated decision data, the banking application may send a request to the capture entity 80 (through the operating system for instance) in order to get the computed liveness score. In response, the capture entity 80 may send the second result (I.e. liveness score) which is forwarded to the banking application with the first result by the operating system 26.

Then the banking application may generate a message 94 by using the first result and the second result 33 depending on the decision data. In other words, if the decision data implies that the second result 33 must be used, the banking application build a message 94 by using the computed liveness score.

Then the banking application may send the message 94 to the terminal 90 in response to the second applicative command 93.

Thanks to some embodiments of the invention, the smart card may save time by executing two treatments on the captured biometric data 62 at the same time. Thus, the transaction processing can be speeded up for better user experience.

In any of the embodiments presented above, the transaction may be a payment transaction having one or more parameters like the amount, a date, a place or a currency for example. The first result may be a percentage of similarity between the captured data and the reference biometric data, and the decision data may be generated by executing the risk analysis applied to both the amount of the payment transaction and the first result.

In some embodiments, the risk analysis may take more than one transaction parameters into account. For instance, the risk analysis may be designed to require the use of the Liveness score if the amount exceeds a certain limit and if the place is located in a predefined country.

In some embodiments, the secure element may check the level of electrical energy available to the smart card and decide to perform the match verification and the liveness detection at the same time only if the a level of energy is above a preset threshold. For example, the secure element may consider that the level of available electrical energy is sufficient (I.e. it reaches the preset threshold) if the smart card is coupled to the terminal 90 in contact mode and consider that the level of available electrical energy is not sufficient (I.e. it does not reach the preset threshold) if the smart card is coupled to the terminal 90 in contactless mode.

In another example, when the smart card embeds a battery, the secure element may compare the charge level of the battery with the preset threshold.

In some embodiment, the applicative command 91 and the second applicative command 93 may be merged in a single applicative command and the message 94 may correspond to the response sent to this single command.

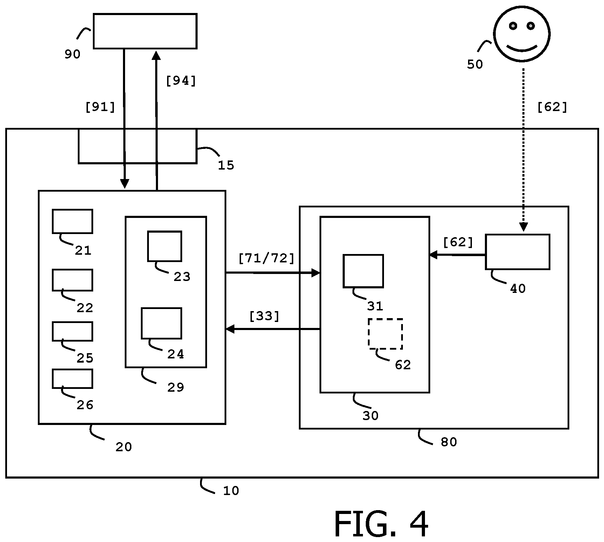

Figure 4 shows a diagram of architecture of a biometric smart card according to an example of the invention.

In this example, the biometric smart card 10 is a banking smart card.

The smart card 10 comprises a secure chip 20 (also called secure element), and a capture entity 80. The capture entity 80 comprises a biometric sensor 40 and a controller 30 of the sensor. The controller 30 may be a processing unit (also named processor unit) like a microcontroller unit (MCU). The biometric sensor may be a conventional biometric sensor like a fingerprint sensor.

The sensor 40 is configured to get a captured biometric data 62 from a user 50. Preferably, the captured biometric data 62 is a fingerprint.

The controller 30 is coupled to the biometric sensor 40. The controller 30 is configured to get the captured biometric data 62 from the sensor 40.

The controller 30 comprises a biometric algorithm 31 aiming at detecting spoofing attacks on the sensor 40. The algorithm is design to operate a liveness detection on the captured biometric data 62.

Optionally, the controller 30 may comprise an analyzer engine for extracting remarkable items from the biometric data collected by the sensor 40.

The controller 30 comprises a processor and a non-volatile memory (not shown). In one embodiment, the non-volatile memory stores software instructions which are executed by the processor to perform the functions described above. In one embodiment, the functions of the controller 30 may be implemented as pure hardware solution or a combination of hardware and firmware.

In the example of Figure 4, the secure element 20 is a conventional smart card chip with additional features. The secure element 20 comprises a banking application 29 which is designed to contribute to a banking transaction with an external machine like a terminal 90. For instance, the transaction may be a payment transaction or cash withdrawal.

The banking application 29 comprises an entity 23 adapted to execute a risk analysis and an entity 24 designed to compute a message (intended to be sent to the terminal 90) which authorizes or denies a banking transaction in which the smart card 10 is involved.

The secure element 20 comprises a reference biometric data 21 previously enrolled by the user 50. The secure element 20 may comprise an extracting engine for extracting remarkable items from the biometric data collected by the sensor 40. The secure element 20 comprises a match algorithm 22 designed to compare the reference biometric data 21 with the captured biometric data 62 (or corresponding remarkable items extracted from the biometric data 62 collected by the sensor 40). The secure element 20 comprises an operating system 26 and may comprise a component 25 designed to check if the available electric power is above a preset threshold.

The secure element 20 comprises a processor and a non-volatile memory (not shown). In one embodiment, the non-volatile memory stores software instructions which are executed by the processor to perform the functions of the secure element. In one embodiment, the functions of the secure element 20 may be implemented as pure hardware solution or a combination of firmware and hardware.

The smart card 10 comprises a hardware communication interface 15 able to communicate with the reader part of a terminal 90 in contact or contactless mode.

Although the controller 30 and the secure element 20 have been described has separated components in the above-presented examples, they also may be merged in a single hardware component, like a secure microcontroller.

Preferably the smart card embeds two hardware processing units (or a single one) able to perform two computation at the same time.

The invention is not limited to the described embodiments or examples. In particular, the described examples and embodiments may be combined.

The invention is not limited to Banking smart cards and applies to any biometric smart cards allocated to a user. The smart card 10 may be an access badge allowing to access a specific area (E.g. building, room or transport network) or to get access to a set of logical data. The smart card 10 may be an identity document which may be used in a transaction where identity of the cardholder is taken into account.

The biometric smart card may embeds several biometric sensors (of same or different types) and the invention may allow to treat a plurality of captured biometric data coming from all embedded biometric sensors.

Although examples of the invention has been provided for a fingerprint sensor, it may apply to devices embedding any biometric sensor targeting various types of data: iris, voice, face, blood or palm print for examples.

It is to be noted that the invention applies to any biometric smart cards having a form factor different from a conventional smart card. For example, the invention may apply to wearable devices like a bracelet or a key ring.

## Claims

1. A method for managing a smart card (10) during a transaction, said smart card comprising a reference biometric data (21) previously enrolled by a user (50) and a biometric sensor (40),
**characterized in that** the method comprises the steps in which the smart card:
- Receives an applicative command (91) originated from a terminal (90), said applicative command comprising a set of transaction parameters and requiring the smart card to authenticate the user using said biometric sensor,
- Gets a captured biometric data (62) from the user using the biometric sensor,
- Generates a first result by performing a match verification to control the captured data matches said reference biometric data (21),
- Generates a decision data by executing a risk analysis applied to at least one element of a group comprising said set of transaction parameters and said first result,
- Builds a message (94) from said first result and, depending on the decision data, from a second result (33) generated by the smart card by executing a liveness detection applied to the captured data, and
- Sends said message to the terminal to authorize or deny the transaction.

2. The method according to claim 1, wherein the transaction is a payment transaction, wherein the applicative command is a Get Processing Options command and wherein the smart card executes said risk analysis on receipt of a Generate AC command.

3. The method according to claim 1, wherein the transaction is a payment transaction, wherein one transaction parameter of said set is an amount of the payment transaction, wherein said first result is a percentage of similarity between the captured data and said reference biometric data, and wherein said decision data is generated by executing the risk analysis applied to both the amount of the payment transaction and said first result.

4. The method according to claim 1, wherein the smart card records the captured data and wherein the smart card only executes the liveness detection on the recorded captured data if the decision data requires that the message be built from the second result.

5. The method according to claim 1, wherein the smart card comprises a secure element (20) and a processing unit (30) distinct from the secure element, wherein the secure element performs said match verification and said processing unit performs said liveness detection at the same time and wherein the secure element retrieves said second result regardless of the decision data.

6. The method according to claim 5, wherein the secure element (20) checks a level of electrical energy available to the smart card and perform said match verification and said liveness detection at the same time only if the level of electrical energy is above a preset threshold.

7. The method according to claim 1, wherein the smart card comprises a secure element (20) and a processing unit (30) distinct from the secure element, wherein the secure element performs said match verification and the processing unit performs said liveness detection at the same time and wherein the secure element only retrieves said second result if specified by the decision data.

8. The method according to claim 7, wherein the secure element (20) checks a level of electrical energy available to the smart card and perform said match verification and said liveness detection at the same time only if the level of energy is above a preset threshold.

9. A smart card (10) comprising a reference biometric data (21) previously enrolled by a user (50), and a biometric sensor (40),
**characterized in that** smart card is configured to :
- Receive an applicative command (91) originated from a terminal (90), said applicative command comprising a set of transaction parameters and requiring the smart card to authenticate the user using said biometric sensor, said applicative command being part of a transaction,
- Get a captured biometric data (62) from the user using the biometric sensor,
- Generate a first result by performing a match verification to control the captured data matches said reference biometric data (21),
- Generate a decision data by executing a risk analysis applied to at least one element of a group comprising said set of transaction parameters and said first result,
- Build a message (94) from said first result and, depending on the decision data, from a second result generated by the smart card by executing a liveness detection applied to the captured data, and
- Send said message to the terminal to authorize or deny the transaction.

10. The smart card according to claim 9, wherein the transaction is a payment transaction, wherein the applicative command is a Get Processing Options command and wherein the smart card is configured to execute said risk analysis on receipt of a Generate AC command.

11. The smart card according to claim 9, wherein the smart card records the captured data and wherein the smart card is configured to only execute the liveness detection on the recorded captured data if the decision data requires that the message be built from the second result.

12. The smart card according to claim 9, wherein the smart card comprises a secure element (20) and a processing unit (30) distinct from the secure element, wherein the smart card is configured to have both the secure element which performs said match verification and the processing unit which performs said liveness detection at the same time and wherein the secure element is configured to retrieve said second result regardless of the decision data.

13. The smart card according to claim 9, wherein the smart card comprises a secure element (20) and a processing unit (30) distinct from the secure element, wherein the smart card is configured to have both the secure element which performs said match verification and said processing unit which performs said liveness detection at the same time and wherein the secure element is configured to retrieve said second result only if specified by the decision data.
